# EUROPEAN PATENT SPECIFICATION

(11) **EP 2 045 379 B1**
(45) Date of publication and mention of the grant of the patent: **29.02.2012**
(21) Application number: 08165407.1
(22) Date of filing: 29.09.2008
(51) Int. Cl.: D02G 3/48, B60C 19/00

(54) **Pneumatic aircraft tire**
Flugzeugluftreifen
Pneumatique d'avion

(30) Priority: 05.10.2007 US 977682 P; 28.08.2008 US 199821
(43) Date of publication of application: 08.04.2009
(73) Proprietor: The Goodyear Tire & Rubber Company, Akron, OH 44316-0001 (US)
(72) Inventor: Baldwin, jr., Donald William, Perrysburg, OH 43551 (US); Gartland, Robert John, Austintown, OH 44515 (US); Westgate, Walter Kevin, Uniontown, OH 44685 (US)
(74) Representative: Kutsch, Bernd

(56) References cited:
- EP-A- 1 431 076
- EP-A- 1 475 248
- EP-A- 1 745 945
- EP-A- 1 800 901
- EP-A- 1 878 591
- WO-A-02/085646
- WO-A-2005/002884
- GB-A- 2 003 525
- US-A- 4 957 799
- US-B1- 6 425 426

## Description

### Field of the Invention

This invention relates to a composite of a plurality of dissimilar individual textile yarns cabled together to a cable which is used to form a tire cord in an aircraft tire,

### Background of the Invention

Compared to other applications such as passenger tires or heavy duty equipment tires, aircraft tires undergo extremely severe operating conditions. This is due to the high speeds of aircraft tires as well as the heavy loading. Aircraft tires are often heavy in order to be able to withstand extreme loads under severe operating conditions. Reducing overall weight of the aircraft is desired for increased performance and functionality, Thus, a reduced weight tire which is capable of the extreme operating environment is deseed.

The load carrying members or carcass reinforcements of bias aircraft tires generally comprise multiple angled plies of textile cords, topically on the order of 10 or more, which are anchored in each bead. One way to reduce tire weight is to utilize stronger tire reinforcements. Traditional bias aircraft tires have been manufactured using polyamide 6 or polyamide 6/6 fibers (Nylon 6. Nylon 6/6) which are made up of long polyamide chains. The attributes of nylon can provide a multitude of linear densities to satisfy given tire requirements. Nylon has excellent ductility which can translate into fatigue resistance, which is required in aircraft application due to the amount of tire cyclic deformation,

Another type of reinforcement is aramid fibers. Aramid reinforcement is made up of long polyamide chains similar to nylon Aramid fibers have very high strength compared to Nylon, but intrinsically poorer ductility. Nylon has superior durability performance (appled cyclic tension - compression loading) versus aramid.

It is known to use merged, hybrid or composite reinforcement tire cords made of two or more types of materials such as nylon or aramid. Hybrid tire cords greatly expand the range of tire cord properties attainable. However, it is very difficult to design an aircraft tire that is made of composite cords and meets all the stringent design requirements: high strength, durability, ability to tolerate thermal loading and ductility. Further, aircraft bias tires are very difficult to model due to the complexity of the design. Still further yet, in order to meet the strength requirements, the tire usually ends up being heavier. Thus an improved aircraft tire is needed, which is capable of meeting high speed, high load and with reduced weight.

EP-A 1 800 901 describes an aircraft tire comprising a cable with two aramid yarns and one nylon yarn.

WO-A-2005/002884 describes a passenger tire comprising a cord comprising a single aramid filament and a single nylon filament. The twist of the aramid fiber filament is about 1.8 turns per 2:54 cm.

US-A- 4.957<799 describes a bias tire for off-the-road applications comprising single aramid yarn and a single nylon yarn.

EP-A- 475 248 describes a belt package for a passenger tire comprising a hybrid cord wherein the hybrid cord comprises a single aramid yarn and a single nylon yarn. A similar cord for a car tire in a comparative example wherein the yarns have linear densities and twist ranges as claimed herein is also described in EP-A- 1-878-591. Further cords for use in tires are described in EP-A- 1 74S 945. WO-A- 02085646 GB-A- 2003 525, EP-A-1 431 076 and US-B-. 6,425,426

### Definitions.

The frowns definitions are controlling for the disclosed invention.

"Aramid" (also to as "aromatic polyamide") are manufactured fibers in which the fiber-forming substance is generally recognized as a long chain synthetic aromatic polyamide in which at least 85% of the amide linkages are attached directly to the two aromatic ring. Representative of an aramid or aromatic polyamide is a poly (p-phenyleneterephtalamide),

"Bias tire" (cross ply) means a tire in which the reinforcing cords in the carcass ply extend diagonally across the tire from bead to bead at a 25° - 65° angle With aspect to equatorial plane of the tire. IF multiple plies are present, the ply corns usually run at oppose angles in alternating layers.

"carcass" means a tire structure apart from the belt structure tread, undertread, and sidewall rubber over the plies, but including the beads,

"cord" means one of the reinforcement strands comprised in plies of a tire.

"Denier" means the weight in grams per 9000 meters.

"Dtex" means the weight in grams per 10000 maters.

"Fabric" means a network of essentially unidirectionally extending cords,
which may be twisted, and which in turn are composed of a plurally of a multiplicity of filaments (which may also be twisted) of a high modulus material.

"Fiber" is a unit of matter, either natural or man-made that forms the basic element of filaments, having a length at least 100 times its diameter or width.

"Filament count" means the number of filaments that make up a yarn. Example: 1000 Denier polyester has approximately 190 filaments.

"Greige" means unfinished cord or fabric.

"LASE" is load at specified elongation.

"Lay length" means the distance at which a twisted filament or strand travels to make a 360° rotation about another filament or strand.

Nylon is understood to be an aliphatic polyamide 6.6, 6 or 4.6.

"Ply" means a continuous layer of rubber-coated parallel cords in the context of a tire and also means a twisted yarn in a context of a yarn or a cord, i.e. the meaning is dependant on the context.

"Polyester" means any polymer synthesized from the polycondensation of a diol and a dicarboxylic acid.

"Tenacity" is stress expressed as force per unit linear density of the unstrained specimen (gm/tex or gm/denier).

"Tensile" is stress expressed in forces/cross-sectional area. Strength in psi=12800 times specific gravity times tenacity in grams per Denier.

"Twisted" means the number of turns about its axis per unit of length of a yarn, turns per inch being TPI.

"Yarn" occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

"Zigzag belt reinforcing structure" means at least two layers of cords or a ribbon of parallel cords having 1 to 20 cords in each ribbon and laid up in an alternating pattern extending at an angle between 5° and 30° between lateral edges of the belt layers.

### Brief Description of the Drawings

The invention will be described by way of example and with reference to the accompanying drawings in which:
FIG. 1 is a schematic view of a cord construction of the invention
FIG. 2 is a plot of load vs. percent elongation for the cord construction of the invention;
FIG. 3 is a plot of break strength vs. # of cycles for the cord construction of the invention;
FIG. 4 is a plot of tenacity vs. # of cycles for the cord construction of the invention;
FIG. 5 is a bar chart illustrating the greige and dipped break strength for Nylon, aramid, and the cord construction of the invention;
FIG. 6 is a bar chart illustrating the tenacity for Nylon, aramid, and the cord construction (dipped) of the invention;
FIG. 7 is a bar chart illustrating the % elongation for Nylon, aramid, and the cord construction (dipped) of the invention;
FIG. 8 is a bar chart illustrating the energy to break characteristics for Nylon, aramid, and the cord construction (dipped) of the invention;
FIG. 9 is a bar chart illustrating the toughness characteristics for Nylon, aramid, and the cord construction (dipped) of the invention;
FIG. 10 is a bar chart illustrating the shrinkage (%) characteristics for Nylon, aramid, and the cord construction (dipped) of the invention;
FIG. 11 is a bar chart illustrating the dynamic break strength characteristics after 4 hours (flexed break strength, unflexed break strength, and retained break strength) for Nylon, aramid, and the cord construction of the invention;
FIG. 12 is a bar chart illustrating the dynamic break strength characteristics (flexed break strength, unflexed break strength, and retained break strength) after 8 hours for Nylon, aramid, and the cord construction of the invention; and
FIG. 13 is a cross section of an exemplary aircraft tire; and
FIG. 14 is a chart illustrating dynamic fatigue resistance vs. number of cycles.

### Detailed Description of the Invention

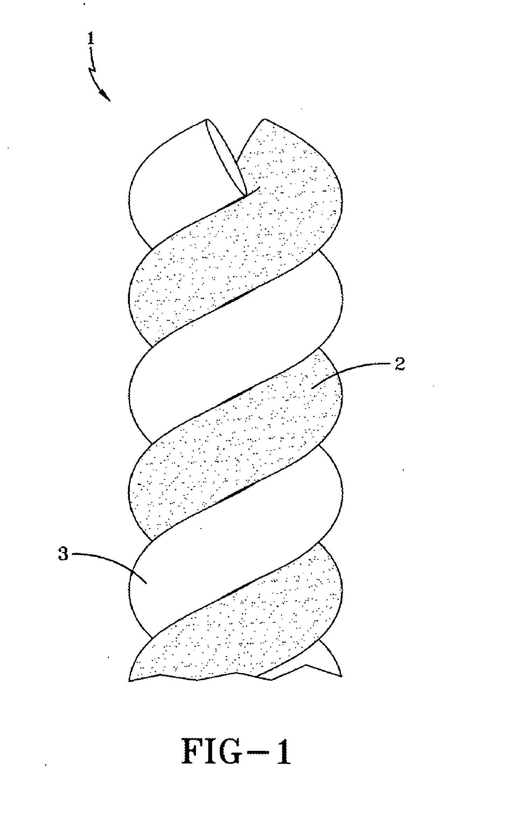

Figure 1 illustrates a first embodiment of a cord construction of the invention. The cable or cord 1 comprises helically cabled dissimilar yarns 2 and 3. The composite or hybrid cord 1 comprises one yarn of an aramid 3. The cord 1 comprises only a single aramid yam 3. The aramid yam 3 may comprise what is known to those skilled in the art as standard aramid. One example of an aramid suitable for the invention is made by Dupont and sold under the trade name Kevlar 29. Another example of a standard aramid suitable for the invention is manufactured by Teijin and sold under the trade name Twaron 1000. The linear density ranges from 1400 dtex to 2000 dtex, more preferably from 1630 to 1700, and is most preferably 1670 dtex. The aramid yam 3 is twisted in the Z direction. The twist ranges from 3 to 16 tpi (twists/2.54 cm) in the Z direction, and more preferably 6 to 12 tpi, and most preferably to 10.7 tpi in the Z direction.

The composite cord further comprises one nylon yam 2, preferably nylon 6/6. Only a single nylon yam 2 is used. The nylon yam 2 has a linear density in the range of 220 to 2100 dtex (1890 denier), more preferably from 1400 to 2100, from 1000 to 1800 dtex, or from 1370 to 1430 dtex, and most preferably 1400 dtex. The nylon yam 2 is twisted by a Z twist in the range of 3 to 16, more preferably from 3 to 7, and most preferably 6.2 (turns per 2.54 cm). The nylon and aramid yarns are then plied or twisted together to form a cable with an S twist in the range of from 3 to 16 tpi, more particularly in the range of 7 to 90, or from 9 to 11.5, and most preferably 9.7 twists/2.54 cm.

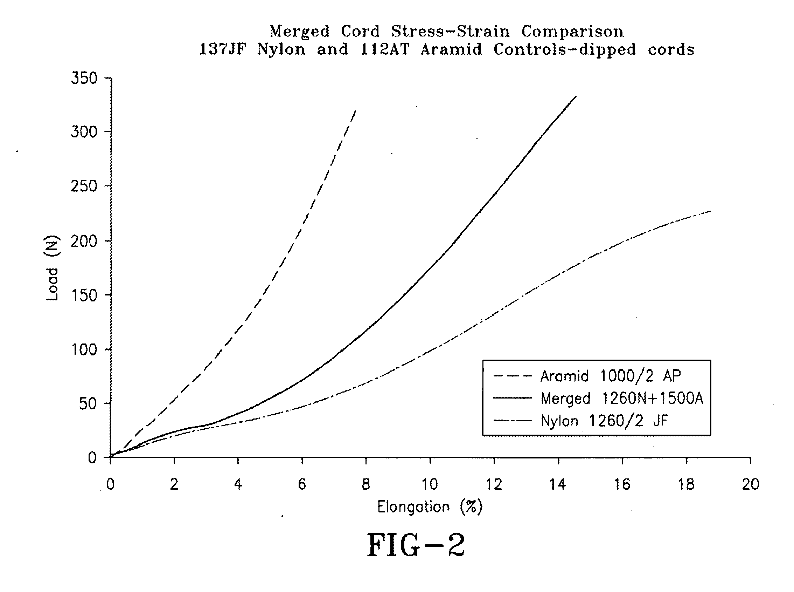

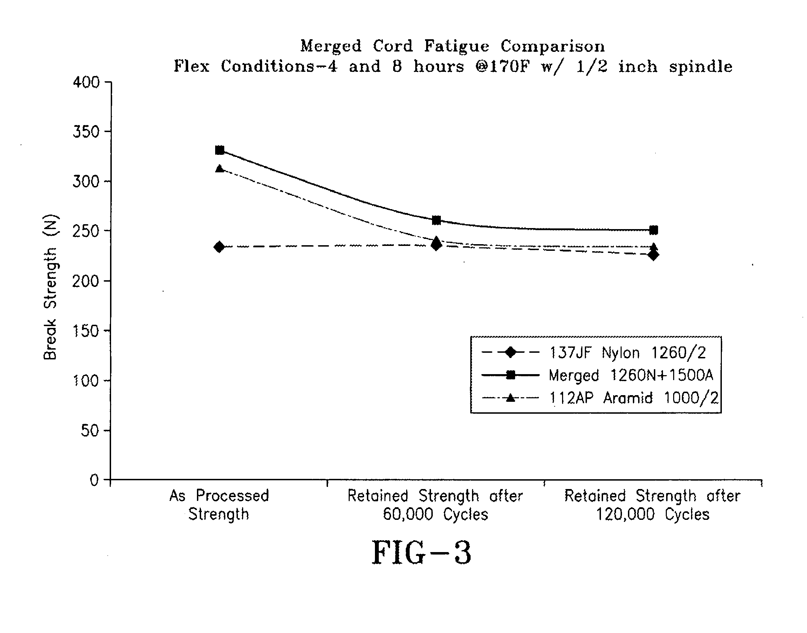

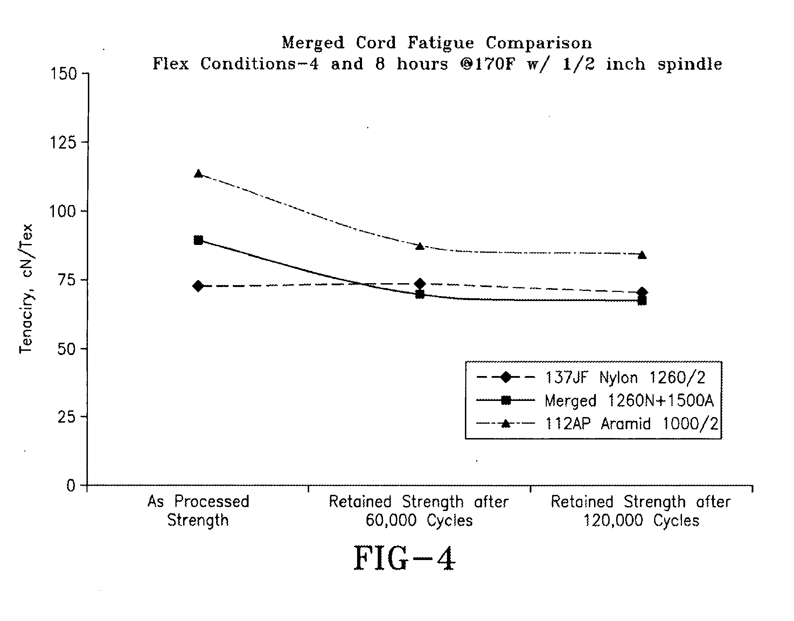

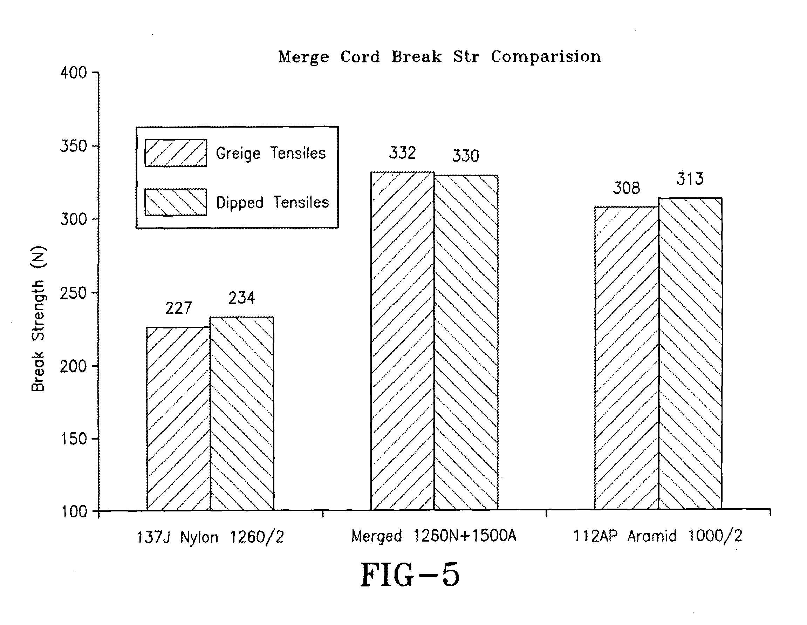

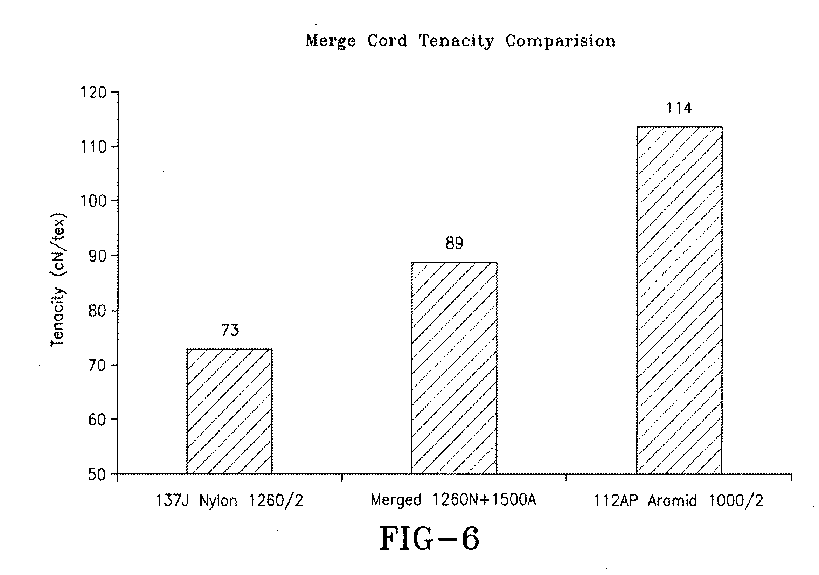

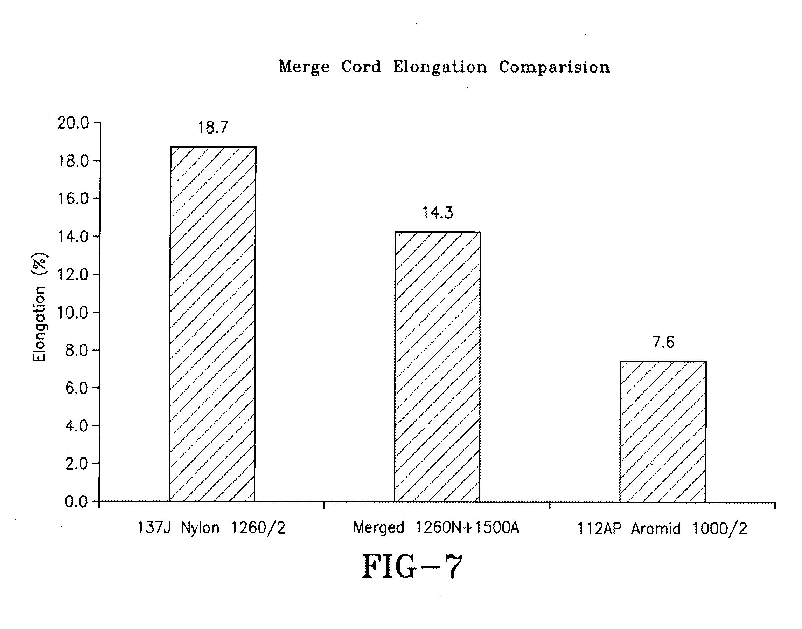

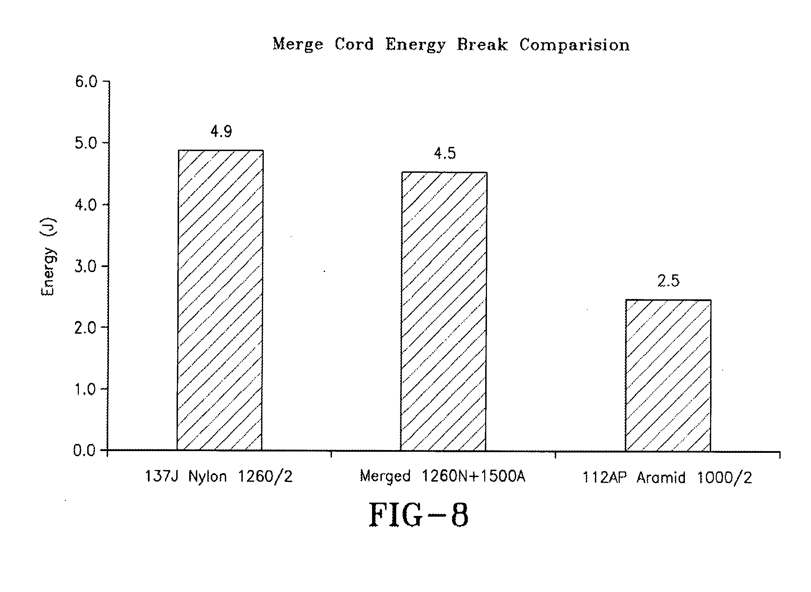

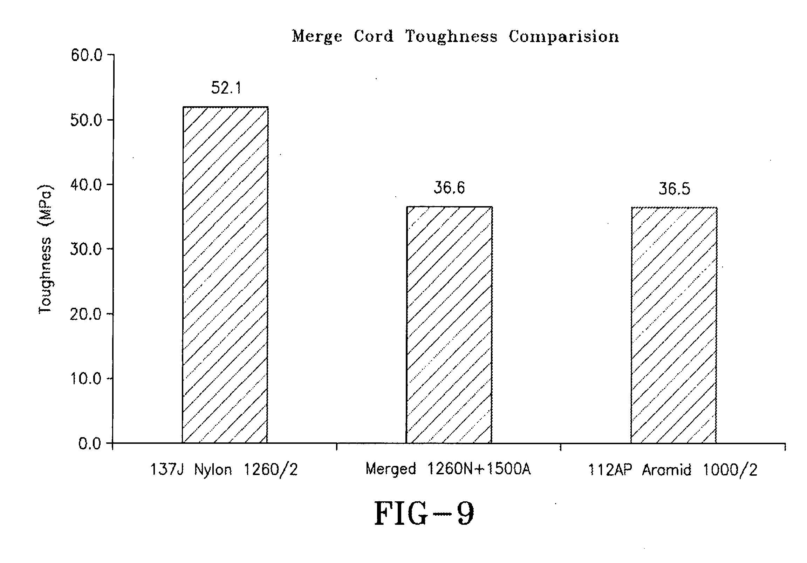

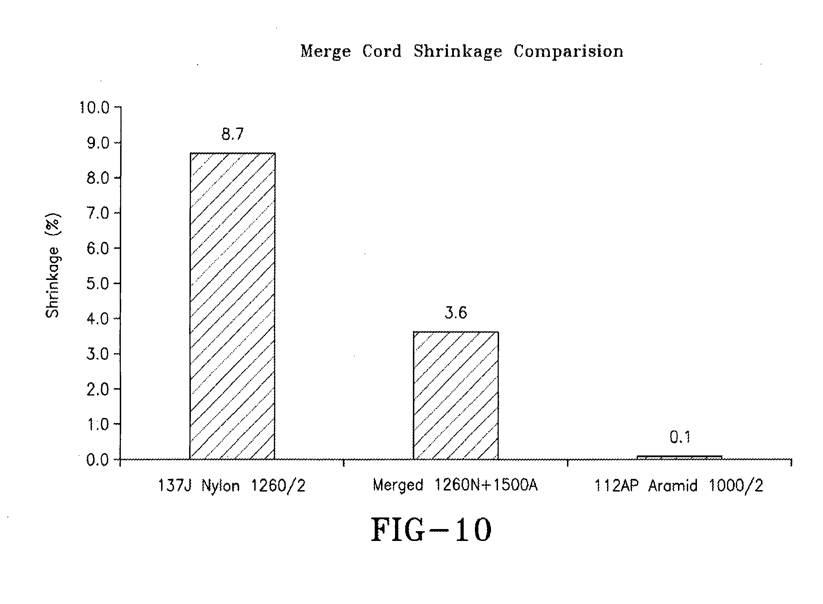

Table I illustrates the cord properties of the first embodiment both greige and dipped in an RLF bath. Table I also illustrates for comparison, a 1400/1/2 Nylon construction and an Aramid 1100/1/2 construction. As shown in the Table and Figure 5, the 1400N + 1670A construction had greatly improved break strength for both greige and dipped. The cord construction had a 45% increase in break strength over nylon and a 5% increase over the aramid. Figure 3 illustrate the change in break strength versus number of cycles, and shows that the break strength of the invention always remains greater than either the nylon or the aramid. Figure 2 illustrates the stress strain curve for the dipped cord construction of the invention and nylon and aramid. The dipped construction of the invention has greater area under the curve as compared to the aramid construction, and performed equally as well as the nylon construction. Figure 7 illustrates the elongation at break, wherein the cord of the invention shows a 24% decrease in elongation compared to nylon. Figure 8 illustrates the energy to break, wherein the cord of the invention has similar energy to break characteristics of nylon. Figure 6 illustrates tenacity, wherein the cord of the invention has a 25% increase in tenacity over nylon. Figure 4 illustrates the tenacity over 120000 cycles, and illustrates the tenacity slightly decreases, then levels out. Figure 9 illustrates toughness for the cord of the invention, and shows the cord of the invention has the toughness characteristics of aramid. Figure 10 illustrates the shrinkage characteristics of the invention, and illustrates a 58% decrease in shrinkage as compared to nylon.

**Table I**

| Dipped and Greige Cable Physical Properties | | | |
|---|---|---|---|
| Cable | 1400 N + 1670 A | Nylon | Aramid |
| | 6.2 N -10.7A/9.7 | 1400/1/2 | 1100/1/2 |
| *Greige Tensile* | | | |
| LASE 5% (N) | 31.8 | 23.6 | 86 |
| Break load(N) | 332 | 227 | 308 |
| Elongation@Break (%) | 16.4 | 24.3 | 9.8 |
| W to B | 2722 | 2758 | 1509 |
| *Dipped Tensiles* | | | |
| LASE 5% (N) | 54.6 | 38.5 | 162.6 |
| Break load(N) | 330 | 234 | 313 |
| Elong. @ Break (%) | 14.3 | 18.7 | 7.6 |
| Denier | 3715 | 3188 | 2736 |
| Gauge, mils | 27 | 26 | 21 |
| Tenacity (cN/tex) | 90 | 73 | 115 |

**Table II**

| Illustration of the cord properties of the present invention for dynamic conditions | | | |
|---|---|---|---|
| Dynamic tensiles | 1260N + 1500 A | 1260/2 Nylon | 1000/2 Aramid |
| ***Break strength (N)*** | | | |
| 4 hr. unflexed | 335.2 | 234.1 | 314.7 |
| 4 hr. flexed | 261 | 236.2 | 240.9 |
| % retained | 78 | 100 | 77 |
| ***18@310F*** | | | |
| 8 hrs. unflexed | 335.2 | 234.1 | 314.7 |
| 8 hrs. flexed | 250.7 | 227.2 | 234.9 |
| % retained | 75 | 97 | 75 |

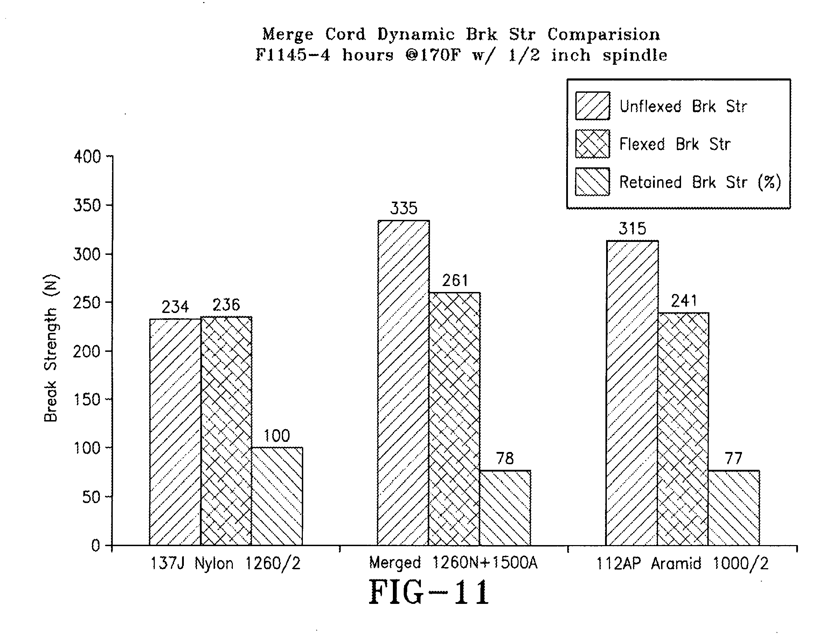

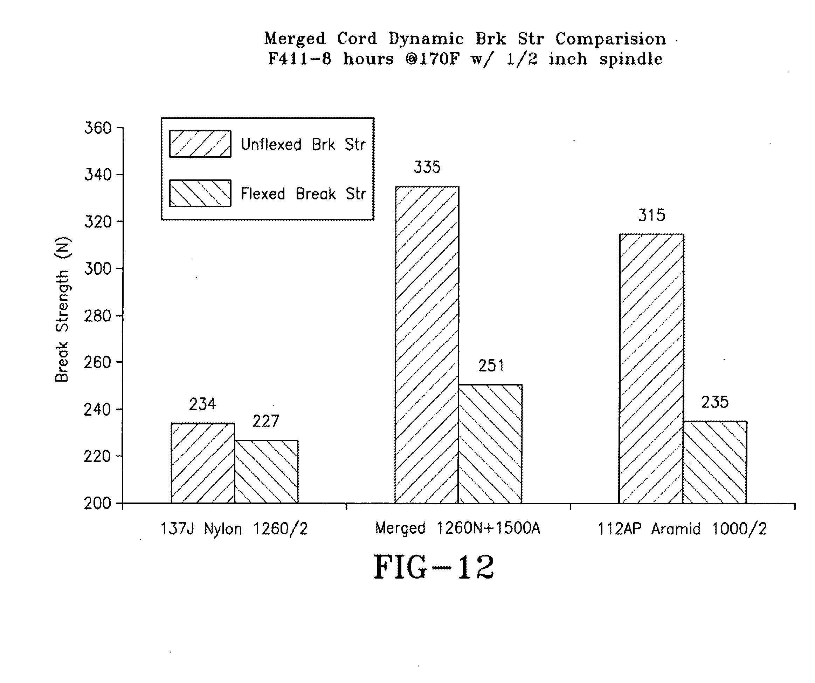

Table II indicates the cord properties of the present invention for dynamic conditions. The break strength of the invention for either the flexed or unflexed condition is greater than either the nylon or aramid values. The test was conducted at 4 hours at 66.7°C (170 F) using a ½ inch spindle. As shown in Figure 11, the cord of the invention maintained a 10% increase in flexed break strength over the 1260 Nylon, after flexing. Figure 12 illustrates the dynamic break strength for both the flexed and unflexed condition, taken after 8 hours at 66.7°C (170 F) with ½ inch spindle (F411 standard). As shown, the cord of the invention maintained a 10% increase in break strength over nylon, after flexing.

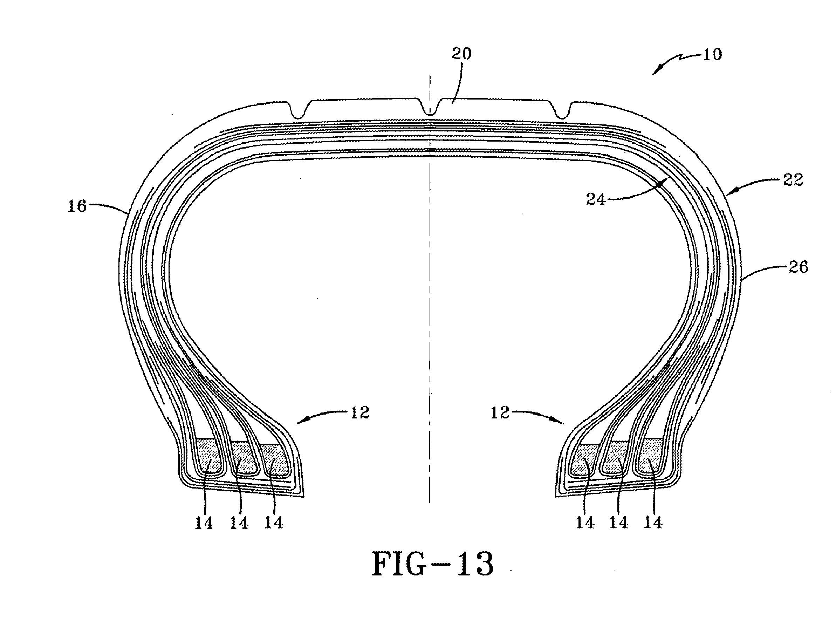

Figure 13 illustrates an aircraft tire 10. Although a bias tire is shown, the aircraft tire could also be radial. The aircraft tire comprises a pair of beads wherein each bead is split into three bead portions 12 each containing a bead core 14 embedded therein. The aircraft tire comprises a sidewall portion 16 extending substantially outward from each of the bead portions 12 in the radial direction of the tire, and a tread portion 20 of substantially cylindrical shape extending between radially outer ends of these sidewall portions 16. Furthermore, the tire 10 is reinforced with a carcass 22 toroidally extending from one of the bead portions 12 to the other bead portion 12. The carcass 22 comprises inner carcass plies 24 and outer carcass plies 26. The inner and outer carcass plies are wrapped in a desired configuration, such as shown for example in Figure 13. The use of the invention is not limited to this configuration, as there are many alternate configurations. The aircraft tire 10 further comprises a belt package arranged between the carcass 22 and the tread rubber. The belt package further comprises a plurality of belts. In one embodiment, one or more of the carcass plies 24, 26 comprise a cable or cord 1 of the invention, as described above.

In another embodiment, one or more of the belts of the belt package comprise a cable or cord 1 of the invention, as described above.

In yet another embodiment the cable or cord 1 according to the invention may be used in the carcass 22 and the belt package of the tire 10.

### Comparative Example

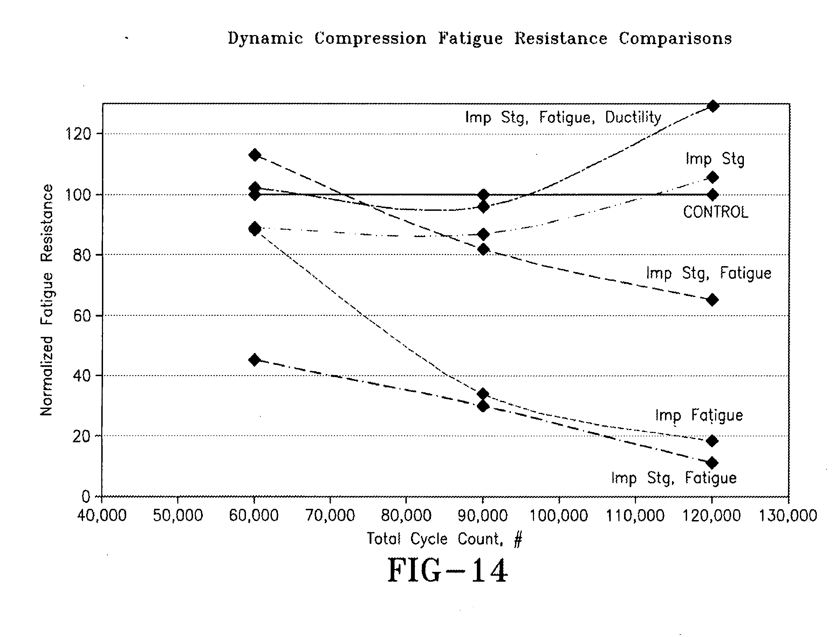

Two test tires 32X11.5-15 of the tire construction shown in Figure 13 were built and tested. The control tire comprises a nylon carcass. The test tire comprises a merged cord construction of 1670 dtex (A) +1400 dtex (N)/1/2; 10.7Z(A) +6.2Z(N) X 9.7 S not falling within the scope of claim 1. The tires were subjected to a series of tests. The tires were subjected to a burst test. The nylon control tire burst at 10.5 MPa (1524 psi). The test tire burst at 8.1 MPa (1176 psi). The tires were also subjected to dynamic testing. The test tire passed 48 normal takeoffs, 1 extended taxi and 1 high speed takeoff before failing. The test fire also passed diffusion testing. The dynamic tire performance data exceeded expectations and were quite surprising. Dynamic fatigue resistance is shown in Figure 14 and illustrates improved strength, fatigue and ductility over the nylon control.

## Claims

1. A pneumatic aircraft tire (10) comprising a carcass (22), a tread (20) and a belt package comprising a plurality of belts, wherein the carcass and/or one or more of the belts comprise a cable (1), **characterised in that**, the cable (1) comprises a single aramid yarn (3) and a single nylon yam (2) cabled together, wherein the aramid yarn (3) has a linear density in a range of 1400 to 2000 dtex, wherein the nylon yam (2) has a linear density in the range of 220 to 2100 dtex, wherein the twist of the aramid yarn (3) ranges from 3 to 16 turns per 2.54 cm in the Z direction, wherein the twist of the nylon yarn (2) ranges from 3 to 16 turns per 2.54 cm in the Z direction, and wherein the overall twist of the cable (1) ranges from 3 to 16 turns per 2.54 cm in the S direction.

2. The pneumatic aircraft tire of claim 1 wherein the nylon yam (2) has a linear density in a range of from 1000 to 1800 dtex.

3. The pneumatic aircraft tire of claim 1 wherein the aramid yam (3) has a linear density in a range of from 1630 to 1700 dtex.

4. The pneumatic aircraft tire of claim 1 or 3 wherein the nylon yarn (2) has a linear density in a range of from 1370 to 1430 dtex.

5. The pneumatic aircraft tire of claim 1 wherein the overall twist of the cable (1) ranges from 9 to 11.5 turns per 2.54 cm in the S direction.

6. The pneumatic aircraft tire of claim 5 wherein the overall twist of the cable (1) is 9.7 turns per 2.54 cm in the S direction.

7. The pneumatic aircraft tire of claim 1 wherein the twist of the aramid yarn (3) ranges from 6 to 12 turns per 2.54 cm in the Z direction.

8. The pneumatic aircraft tire of claim 1 wherein the twist of the nylon yarn (2) ranges from 3 to 7 turns per 2.54 cm in the Z direction.

9. The pneumatic aircraft tire of claim 1 wherein the twist of the aramid yam (3) is 10.7 turns per 2.54 cm in the Z direction.

10. The pneumatic aircraft tire of claim 1 or 9 wherein the twist of the nylon yarn (2) is 6.2 turns per 2.54 cm in the Z direction.

## Patentansprüche

1. Flugzeug-Luftreifen (10), umfassend eine Karkasse (22), eine Lauffläche (20) und ein Gürtelpaket, das eine Vielzahl von Gürteln umfasst, wobei die Karkasse und/oder einer oder mehrere der Gürtel ein Seil (1) umfassen, **dadurch gekennzeichnet, dass** das Seil (1) ein einziges Aramidgarn (3) und ein einziges Nylongarn (2), die miteinander verseilt sind, umfasst, wobei das Aramidgarn (3) eine lineare Dichte in einem Bereich von 1400 bis 2000 dtex aufweist, wobei das Nylongarn (2) eine lineare Dichte im Bereich von 220 bis 2100 dtex aufweist, wobei die Verdrillung des Aramidgarns (3) sich auf 3 bis 16 Drehungen je 2,54 cm in der Z-Richtung beläuft, wobei die Verdrillung des Nylongarns (2) sich auf 3 bis 16 Drehungen je 2,54 cm in der Z-Richtung beläuft, und wobei die Gesamtverdrillung des Seils (1) sich auf 3 bis 16 Drehungen je 2,54 cm in der S-Richtung beläuft.

2. Flugzeug-Luftreifen nach Anspruch 1, wobei das Nylongarn (2) eine lineare Dichte in einem Bereich von 1000 bis 1800 dtex aufweist.

3. Flugzeug-Luftreifen nach Anspruch 1, wobei das Aramidgarn (3) eine lineare Dichte in einem Bereich von 1630 bis 1700 dtex aufweist.

4. Flugzeug-Luftreifen nach Anspruch 1 oder 3, wobei das Nylongarn (2) eine lineare Dichte in einem Bereich von 1370 bis 1430 dtex aufweist.

5. Flugzeug-Luftreifen nach Anspruch 1, wobei die Gesamtverdrillung des Seils (1) sich auf 9 bis 11,5 Drehungen je 2,54 cm in der S-Richtung beläuft.

6. Flugzeug-Luftreifen nach Anspruch 5, wobei die Gesamtverdrillung des Seils (1) 9,7 Drehungen je 2,54 cm in der S-Richtung beträgt.

7. Flugzeug-Luftreifen nach Anspruch 1, wobei die Verdrillung des Aramidgarns (3) sich auf 6 bis 12 Drehungen je 2,54 cm in der Z-Richtung beläuft.

8. Flugzeug-Luftreifen nach Anspruch 1, wobei die Verdrillung des Nylongarns (2) sich auf 3 bis 7 Drehungen je 2,54 cm in der Z-Richtung beläuft.

9. Flugzeug-Luftreifen nach Anspruch 1, wobei die Verdrillung des Aramidgarns (3) 10,7 Drehungen je 2,54 cm in der Z-Richtung beträgt.

10. Flugzeug-Luftreifen nach Anspruch 1 oder 9, wobei die Verdrillung des Nylongarns (2) 6,2 Drehungen je 2,54 cm in der Z-Richtung beträgt.

## Revendications

1. Bandage pneumatique (10) pour aéroplane comprenant une carcasse (22), une bande de roulement (30) et un paquet de ceintures comprenant plusieurs ceintures, la carcasse et/ou une ou plusieurs ceintures comprenant un câblé (1), le câblé (1) comprenant un fil d'aramide unique (3) et un fil de nylon unique (2) torsadés l'un avec l'autre, le fil d'aramide (3) possédant une densité linéaire dans la plage de 1400 à 2000 dtex, le fil de nylon (2) possédant une densité linéaire dans la plage de 220 à 2100 dtex, la torsion du fil d'aramide (3) se situant dans la plage de 3 à 16 tours par 2,54 cm dans la direction Z, la torsion du fil de nylon (2) se situant dans la plage de 3 à 16 tours par 2,54 cm dans la direction Z, et la torsion globale du câblé (1) se situant dans la plage de 3 à 16 tours par 2,54 cm dans la direction Z.

2. Bandage pneumatique pour aéroplane, selon la revendication 1, dans lequel le fil de nylon (2) possède une densité linéaire dans la plage de 1000 à 1800 dtex.

3. Bandage pneumatique pour aéroplane, selon la revendication 1, dans lequel le fil d'aramide (3) possède une densité linéaire dans la plage de 1630 à 1700 dtex.

4. Bandage pneumatique pour aéroplane, selon la revendication 1 ou 3, dans lequel le fil de nylon (2) possède une densité linéaire dans la plage de 1370 à 1430 dtex.

5. Bandage pneumatique pour aéroplane, selon la revendication 1, dans lequel la torsion globale du câblé (1) se situe dans la plage de 9 à 11,5 tours par 2,54 cm dans la direction S.

6. Bandage pneumatique pour aéroplane, selon la revendication 5, dans lequel la torsion globale du câblé (1) s'élève à 9,7 tours par 2,54 cm dans la direction S.

7. Bandage pneumatique pour aéroplane, selon la revendication 1, dans lequel la torsion du fil d'aramide (3) se situe dans la plage de 6 à 12 tours par 2,54 cm dans la direction Z.

8. Bandage pneumatique pour aéroplane, selon la revendication 1, dans lequel la torsion du fil de nylon (2) se situe dans la plage de 3 à 7 tours par 2,54 cm dans la direction Z.

9. Bandage pneumatique pour aéroplane, selon la revendication 1, dans lequel la torsion du fil d'aramide (3) s'élève à 10,7 tours par 2,54 cm dans la direction Z.

10. Bandage pneumatique pour aéroplane, selon la revendication 1 ou 9, dans lequel la torsion du fil de nylon (2) s'élève à 6,2 tours par 2,54 cm dans la direction Z.
